# EUROPÄISCHE PATENTSCHRIFT

(11) **EP 2 792 962 B1**
(45) Veröffentlichungstag und Bekanntmachung des Hinweises auf die Patenterteilung: **22.11.2017**
(21) Anmeldenummer: 14164888.1
(22) Anmeldetag: 16.04.2014
(51) Int. Cl.: F24F 12/00, F24F 13/20, F24F 13/22

(54) **Gehäuse zur Halterung von großflächigen Wärmetauscherplatten und die dazugehörige Lüftertechnik für die Montage an der Gebäudeaußenwand**
Housing for holding large area heat exchanger plates, and related fan technology for mounting on the outer wall of a building
Boîtier de fixation de plaques d'échangeur thermique de grande taille et technique de ventilation correspondante pour le montage sur une paroi extérieur de bâtiment

(30) Priorität: 16.04.2013 DE 102013006490
(43) Veröffentlichungstag der Anmeldung: 22.10.2014
(73) Patentinhaber: EnerSearch GmbH, 71336 Waiblingen (DE)
(72) Erfinder:
(74) Vertreter: Clarenbach, Carl-Philipp

(56) Entgegenhaltungen:
- EP-A2- 2 306 106
- WO-A1-2010/146553
- DE-A1-102009 032 047
- DE-A1-102010 042 948

## Beschreibung

Die Erfindung betrifft eine Vorrichtung entsprechend dem Oberbegriff des Anspruchs 1.

Heute energetisch sanierte Gebäude und Neubauten sind dadurch gekennzeichnet, dass die Gebäude dicht sind und entweder ein Wärmedämmverbundsystem, auch WDVS genannt, auf den Mauerkörper aufgebracht wird oder dickere Wände mit hoher Dämmwirkung verbaut werden. Um weitere Energie zu sparen und um die Feuchtigkeit aus dem Gebäude zu bekommen, werden dezentrale oder zentrale Lüftungsanlagen vorzugsweise mit Wärmerückgewinnung eingebaut. Das Wärmerückgewinnungsmodul einer zentralen Lüftungsanlage mit Wärmerückgewinnung wird heute zentral an einem Platz je Gebäude beziehungsweise je Wohnung installiert, an dem die Zuluftkanäle und Abluftkanäle für dieses Gebäude, beziehungsweise dieser Wohnung, zusammenlaufen. Von Nachteil bei einer zentralen Installation ist, dass Lüftungskanäle sowohl für Zu- als auch Abluft in den Baukörper installiert werden müssen.

Bei dezentralen Lüftungen mit Wärmerückgewinnung werden die Wärmerückgewinnungseinheiten vorzugsweise in einem Wanddurchbruch je Zimmer installiert. Da hierbei eine Vielzahl von Wanddurchbrüchen in den aufwändig abgedichteten und gedämmten Baukörper gemacht werden müssen sind damit Nachteile bezüglich Lüftergeräuschen, Außengeräuschen, Kälte- und Wärmebrücken verbunden. Um den Wirkungsgrad der Wärmetauscherelemente zu erhöhen müssen großflächige Wärmetauscherplattenebenen installiert werden, da diese eine höhere Wärmeübertragung in der kalten Jahreszeit und eine höhere Abkühlung der Zuluft in der warmen Jahreszeit ermöglichen. Diese großflächigen Wärmetauscherplattenebenen sind aber in einem dezentralen Wanddurchbruch nur begrenzt einbaubar, da die genannten Nachteile mit der Größe des Durchmessers des Wanddurchbruchs erhöht werden.

Neu mit der heutigen Bauweise ist, dass die Wände entweder dicker gebaut werden oder ein Wärmedämmverbundsystem installiert wird, sodass beide Varianten das Bauvolumen des Gebäudes vergrößern. Dieses zusätzliche Bauvolumen gibt neue nutzbare Räume, in die die Erfindung eingebaut werden kann, beziehungsweise in die die Verrohrung für die zusätzliche Ab- und Zuluftkanäle eingebaut werden kann.

Damit Kondensationsflüssigkeit eines Plattenwärmetauschers während des Lüftungsbetriebes sicher nach Außen abgeleitet werden kann, sollte der Plattenwärmetauscher parallel zur Wand eingebaut und alle Flüssigkeitsführenden Vorrichtungen so gestaltet werden, dass weder der Lüfter noch Teile des Gebäudes feucht werden können und sowohl Lüfter- als auch Außengeräusche im Gebäudeinneren >25% reduziert, messbar in dBa, sind und durch die Installation der Lüfter keine Kälte- und Wärmebrücken in der Gebäudewand entstehen.

Parallel zur Gebäudewand angebrachte Gehäuse mit von parallel installierten Plattenwärmetauschern, in welchem die die Plattenebenen der Plattenelemente parallel zur Gebäudewand verlaufen, bilden eine ideale Vorrichtung zur Installation von dezentralen Lüftungssystemen mit Wärmerückgewinnungen an und in die Gebäudeaußenwand. Großflächige Plattenwärmetauscher mit hohen Wirkungsgraden können ideal in die Gebäudeaußenwand integriert werden bei sicherer Ableitung des Kondensat nach Außen, wobei sowohl Lüfter- als auch Außengeräusche nur stark reduziert ins Gebäudeinnere gelangen können und Kälte- und Wärmebrücken durch den Einbau in die Gebäudeaußenwand nicht entstehen.

### Stand der Technik

Dezentrale Lüftungen mit Wärmerückgewinnung:
Nach dem heutigen Stand der Technik, werden Plattenwärmetauscher, die dezentral in der Gebäudehülle verbaut werden, heute horizontal eingebaut, da bei parallelem Einbau im Wanddurchbruch ein zu großer Wanddurchbruch in der Gebäudewand notwendig werden würde.

Ein großer Wanddurchbruch hat folgende Nachteile: höhere Außengeräusche im Innenraum, höhere Lüftergeräusche im Innenraum, Kältebrücken in der kalten Jahreszeit und Wärmebrücken in der warmen Jahreszeit, Statik der Gebäudewand wird eingeschränkt.

Durch die begrenzte Größe der Wanddurchbrüche können nur Wärmetauscher mit kleinflächigen Wärmetauscherplattenebenen mit geringerem Wirkungsgrad eingebaut werden.

Der horizontale Einbau von horizontal zur Gebäudewand eingebauten Wärmetauscherplattenebenen muss zwingend mit einem Neigungswinkel zum Kondenswasserabfluss eingebaut werden. Wird dies vom installierenden Monteur nicht vorschriftsgemäß durchgeführt, kann Kondenswasser in den Baukörper eindringen und diesen schädigen.

Der Luftauslass und der Lufteinlass werden bauartbedingt auf gleicher Höhe bzw. mit nur geringem Niveauunterschied bis zur Ober- und Unterkante des Wanddurchbruchs eingebaut. Dadurch sind Lüftergeräusche und Außengeräusche sehr schwer zu unterdrücken. Lüftungsanlagen müssen jeweils pro Raum installiert werden. Dies führt zu einer Vielzahl von Wanddurchbrüchen und installierten Lüftungsanlagen.

Zentrale Lüftungen mit Wärmerückgewinnung:
Um ein ganzes Haus oder eine Wohnung mit nur einer zentralen Lüftung mit Wärmerückgewinnung zu belüften, werden großflächige Wärmetauscher gebraucht. Wegen ihrer Größe werden diese mit ihrem Gehäuse heute im Keller, auf dem Dachboden und in Schränken eingebaut. Sie können wegen ihrer Größe nicht in einem Wanddurchbruch verbaut werden.

Lange Lüftungskanäle müssen in die einzelnen Räume installiert werden. Dies trägt das Risiko der Verschmutzung und der Verkeimung. Die Reinigung der langen Kanäle ist schwer durchführbar.

Der nachträgliche Einbau in den Bestandsbau ist nur mit erheblichem Aufwand umsetzbar. Dieser führt zu zusätzlichen Kosten und Einschränkungen für die Nutzer während der Installation.

Ein Abflusskanal für das anfallende Kondenswasser ist zwingend notwendig.

Der Einbau im Gebäude ist nur begrenzt möglich. Da dies teures Bauvolumen verbraucht, ist der Einbau von großflächigen Wärmetauscherebenen nicht überall möglich. Eine alternative Lösung mit vielen kleinflächigen Wärmetauscherebenen hat daneben den Nachteil von höheren Druckverlusten beim Durchströmen der Wärmetauscherebenen, was zu höherem Stromverbrauch der Lüfter und zu höher Geräuschentwicklung führt. DE 10 2009 032047 offenbart eine Vorrichtung nach dem Oberbegriff des Anspruchs 1.

### Aufgabe der Erfindung

Aufgabe der Erfindung ist es, eine einfache Vorrichtung zur Lüftführung, zum Kondensatabfluss und zum Halten eines Plattenwärmetauschers und der dazugehörigen Lüftertechnik an der Gebäudewand zu schaffen, die einen Wirkungsgrad des Plattenwärmetauschers von bis zu 95% ermöglicht, in ein Wärmedämmverbundsystem integrierbar ist, beziehungsweise fester Bestandteil des Wärmedämmverbundsystems ist oder in einer Nische in eine Gebäudewand montiert wird oder auf die Gebäudewand montiert wird, Lüftungs- und Außengeräusche zum Innenraum hin reduziert, eine sichere Ableitung des Kondensats nach Außen gewährleistet und keine Kälte- und Wärmebrücken in der Gebäudehülle entstehen lässt und eine kostengünstige Produktion zulässt.

### Offenbarung der Erfindung

Diese Aufgabe wird durch eine Vorrichtung mit den Merkmalen der Ansprüche 1 bis 10 gelöst.

Da die Erfindung den Einbau parallel zur Gebäudewand ermöglicht, können großflächige Plattenwärmetauscher mit hohen Wirkungsgraden flach an, in oder auf die Gebäudehülle dezentral verbaut werden. Die parallel zur Gebäudewand angebrachten Plattenwärmetauscherplatten, vorzugsweise ohne Neigungswinkel, ermöglicht den Kondensatabfluss nach unten unter allen möglichen Lüftungsbedingungen und ermöglicht einen doppelten Schallbruch damit Lüfter- und Außengeräusche im Gebäudeinneren nicht wahrgenommen werden. Die Lüfter sind so verbaut, dass sie ohne das Plattenwärmetauschergehäuse zu öffnen über die Öffnungen (1IIa) und (1IIb) revisioniert werden können und vom abfließenden Kondensat nicht schaden nehmen. Daneben ermöglicht die wasserdichte Konstruktion dennoch ein öffnen und schließen des Plattenwärmetauschergehäuses zur Revision und Reinigung aller Komponenten im Plattenwärmetauschergehäuse, wenn alternativ eine zusätzliche Putzanschlussschiene um das Gehäuse auf dem Außenputz installiert wird.

Das Gehäuse weist eine umlaufende wasserdichte Dichtungslippe und Dehnfuge auf. Dadurch können die jeweiligen Halbschalen gegenseitig über eine umlaufende Dichtungslippe und Dehnfuge gegenseitig wasserdicht verklebt oder verschlossen und wieder geöffnet werden. Dadurch kann das Gehäuse fest in oder auf die Gebäudeaußenwand montiert werden, oder revisionsfähig verbaut werden.

Der Einbau des Gehäuses auf die Gebäudeaußenwand, alternativ in Nische, für vorzugsweise diamantförmige zur Gebäudeaußenwand parallel verlaufende großflächige Wärmetauscherplattenebenen ermöglicht es, dass große Wärmetauscherflächen mit hohem Wirkungsgrad dezentral installiert werden können. Die schräg verlaufenden Luftkanäle des eingebauten Plattenwärmetauschers (10), liegen vorzugsweise 45° zur senkrechten Achse, da in dieser Position sowohl im Winter als auch im Sommer das Kondensat im jeweils anderen Außenwandluftdurchgang ideal nach außen über die Fassade ablaufen kann.

In einer anderen Ausführungsform verlaufen die einen Luftkanäle des eingebauten Plattenwärmetauschers (10) 90° zur senkrechten Achse und die anderen Luftkanäle 0° zur senkrechten Achse. Dies verbessert den Kondensatabfluß für die senkrechte Luftführung, die dem Sommerbetrieb oder Winterbetrieb zugeordnet werden muss. In einer weiteren Ausführungsform verlaufen die einen Luftkanäle des eingebauten Plattenwärmetauschers (10) kleiner 90° zur senkrechten Achse und die anderen größer 0° zur senkrechten Achse.

Einfache und kostengünstige Installation von dezentralen Lüftungen mit hohen Wirkungsgraden ist möglich. Bei dieser dezentralen Installation werden Wirkungsgrade der Wärmerückgewinnung von bis zu 95% möglich.

Keine Vielzahl von teilweise großen Wanddurchbrüchen ist notwendig. Die Vorrichtung benötigt Wanddurchbrüche von vorzugsweise nur bis zu 10,7 cm Durchmesser, im Gegensatz von bis zu 35 cm Durchmesser, wie sie bei heutigen dezentralen Lüftungen noch notwendig sind.

Der Einbau parallel zur Wand ermöglicht einen einfacheren und schnelleren Kondensatwasserabfluss als der Einbau von horizontalverlaufenden, beziehungsweise bei mit flachem Winkel eingebauten, Wärmetauscherplatten. Der einfache und schnelle Kondenswasserabfluss hat insbesondere Vorteile, damit bei kalten Jahreszeiten das Einfrieren des Kondenswassers unterbunden wird.

Der Lufteinlass und Luftauslass ist immer höhenversetzt. Durch den entstehenden Winkel der Luftführung kann ohne nennenswerte Erhöhung der Druckverluste sowohl am unteren Winkel des Lufteinlasses, als auch am oberen Winkel des Luftauslasses die Außengeräusche stark reduziert werden. Durch die Vorrichtung können Außengeräusche wie Verkehrslärm, natürliche Geräuschquellen, etc. durch das Gehäuse für den Plattenwärmetauscher im Gebäudeinneren nur gering wahrgenommen werden.

Die Lufteinlässe und die Luftauslässe je Vorrichtung sind durch den jeweiligen direkten oder wahlweise seitlichen Lufteingang und Luftausgang für die einfache Luftkanalführung in der Gebäudefassade, das heißt im WDVS, etc., in das Gebäude in einem oder in einer Vielzahl von Räumen gleichzeitig zur verbesserten Luftströmungsverteilung möglich. Dadurch, dass der Lufteinlass und der Luftauslass in und aus dem Gebäudeinneren durch die seitlichen Luftkanalein- und ausführungen (3) vervielfältigbar sind, ist die Luftführung in weitere Räume, das heißt eine Vielzahl von Räumen möglich. Das heißt, der Lufteinlass ist sowohl direkt als auch gleichzeitig über den Seitenkanal, beziehungsweise über den Seitenkanal auch noch aufgefächert. Die gleiche Vielfältigkeit besteht ebenfalls für den Luftauslass aus dem Gebäudeinnenraum. Dadurch ist eine einfach installierbare weit verzweigte Gebäudedurchlüftung möglich.

Um eine symmetrische und asymmetrische Lüftführung und eine nutzerabhängig Lüftung zu gewährleistet kann jeweils ein Lüfter für den Luftausgangskanal und ein Lüfter für den Lufteingangskanal separat eingebaut werden.

Es besteht keine Flächen- und Raumbegrenzung da die ganze Fassade auf der Gebäudeaußenwand für die Installation der großflächigen Wärmetauscherelemente nutzbar gemacht werden kann.

Die Vorrichtung ist dadurch gekennzeichnet, dass durch den Einbau der Vorrichtung, im Winter keine Kältebrücken und im Sommer keine Wärmebrücken in der Gebäudehülle und in der Gebäudewand entstehen.

Um Produktionskosten zu sparen kann die Vorrichtung in einer Tiefe für das Gehäuse produziert werden. Die Aufdoppelung mit weiteren heute verwendeten Dämmstoffen und Wärmedämmverbundsysteme wie EPS, EPX, Mineralische Dämmung, Naturdämmstoffe, etc. auf oder in die Gebäudewand ist möglich. Es sind Rillen (9) in die Gehäuseaußenwand integriert, damit sowohl der Putz als auch ein Kleber für die Verklebung an der Außenwand und die Anpassung an andere WDVS-Stärken mit oben genannten Dämmmaterialien gut hält.

Vorrichtung ist dadurch gekennzeichnet, dass die die abstehenden Luftkanäle (1Ia, 1Ib, 1IIa, 1IIb) beliebig lang sein können und vor Montage auf die genaue Verwendung abgeschnitten werden können. für alle Materialtiefen oder Materialdicken des jeweils in einem Gebäude verwendeten WDVS nur eine Ausführungsvariante extrudiert beziehungsweise geschäumt werden kann. Da durch die festverbundenen und abschneidbaren abstehenden Luftein- und Auslässe im Gehäuse eine Anpassung auf die jeweilige Materialtiefe oder Materialdicken des jeweils im Gebäude verwendeten WDVS ohne Beeinträchtigung des sicheren Kondenswasserabfluss nach außen möglich ist und die höhere Materialtiefe oder die höhere Materialdicke des jeweils im Gebäude verwendeten WDVS einfach auf die Seiten des Gehäuses an der Position (9) aufgeklebt werden kann und die abstehenden Luftkanäle (1Ia, 1Ib, 1IIa, 1IIb) genau nach Materialstärke des WDVS und Putz- und Kleberstärke abgelängt werden können.

### Detaillierte Beschreibung der Erfindung

Ausführungsbeispiele sind in der Zeichnung dargestellt und werden im Folgenden näher beschrieben.

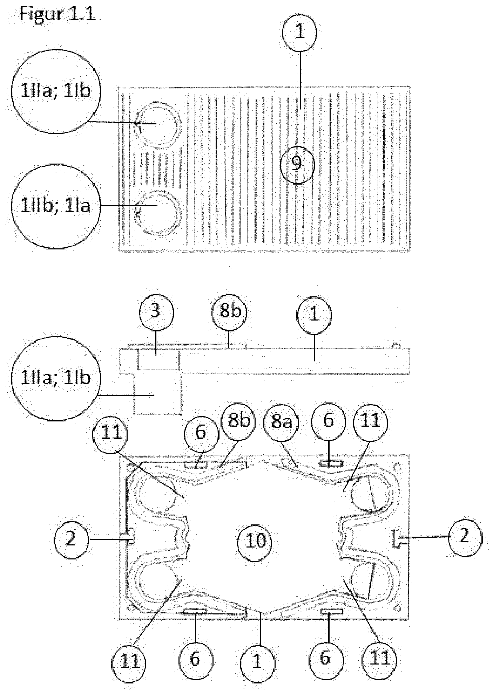

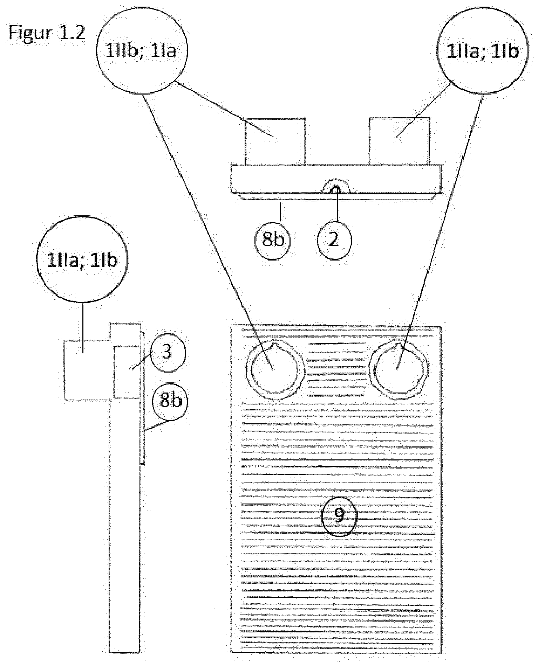

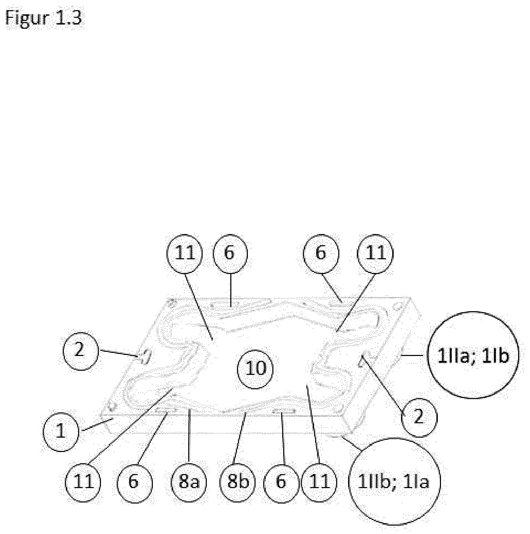

Es zeigt
Figur 1.1 und Figur 1.2: verschiedene Seitenansichten der Vorrichtung
   - 1: Gehäuse als Halbschale
   - 1Ia: Innenluftzuluftkanal
   - 1Ib: Innenluftabluftkanal
   - 1IIa: Außenluftzuluftkanal
   - 1IIb: Außenluftabluftkanal
   - 2: Sicherungsplombe für Elektrokabel nach Außen
   - 3: Herausnehmbare Wand für seitlichen Luftauslass und -einlass
   - 6: Sicherungsplombe des Kabelreservoirs wenn Reservoir nicht benötigt
   - 8a: Umlaufdehnungsfuge
   - 8b: Umlaufdehnungslippe
   - 9: Rillen vorne und hinten auf geschlossenem Gehäuse
   - 10: Platz für Plattenwärmetauscher
   - 11: Halterung und Position für Lüfter
Figur 1.3 zeigt eine perspektivische Ansicht der Vorrichtung
   1 Gehäuse als Halbschale
   1Ia. Innenluftzuluftkanal
   1Ib. Innenluftabluftkanal
   1IIa. Außenluftzuluftkanal
   1IIb. Außenluftabluftkanal
   2 Kabel Sicherungsplombe zur Sicherung nach Außen
   6 Plombe zum Einstecken in nicht genütztes Kabelreservoir, je nachdem wo die Lüfter eingebaut werden. Die ist Plombe zum Blockieren des Hauptluftkanals für den Fall, dass Luft über Luftflachkanal für verschobenen Luftein- und Luftauslass geleitet wird.
   8a.Gegenseitig umlaufende Dehnfuge je Halbschale bis Mitte Halbschale
   8b.Gegenseitig umlaufende Dichtungslippe je Halbschale bis Mitte Halbschale
   10 Positionierung und Halterung für vorzugsweise diamantförmig eingebauten Plattenwärmetauscher
   11 Positionierung und Halterung für Zu- und Abluftlüfter mit seitlich nach unten zur Mitte des Gehäuses angebrachter Kondenswasserfuge

Die Vorrichtung für großflächige Wärmetauscherplatten, vorzugsweise ein Kreuzstromplattenwärmetauschers, ist derart gestaltet, dass die

Wärmetauscherplattenebenen parallel zur Gebäudewand im Gehäuse eingebaut werden. Der Einbau des Plattenwärmetauschers wird vorzugsweise diamantförmig in der Mitte des Gehäuses eingebaut, sodass nach unten im Abluftkanal nach Außen die anfallende Kondensatflüssigkeit einfach nach unten abtropfen kann. Unten über eine Abfangvorrichtung gesammelt und an einer Wasserführung unter einem schräg eingebauten Lüfter nach unten über einen unten angebrachten Kanal an der Innenseite des Luftauslasskanales (1IIb) wird das Kondenswasser sicher nach Außen abgeleitet. Während des Sommerbetriebes wird Kondensat an der gegenüberliegenden Seite des Plattenwärmetauschers am Zuluftkanal des Gehäuses von der Gebäudeaußenseite anfallen. Da das System symmetrisch aufgebaut ist, wird auch unter dieser Lüftungssituation das Kondensat auf dieser Seite über einen unten angebrachten Kanal an der Innenseite des Lufteinlasskanales (1IIa) nach Außen sicher abgeleitet.

Alternativ können die Lüfter oben im Gehäuse eingebaut werden, gespiegelt nach oben zu Position der Lüfter (11), damit diese vom Gebäudeinneren über den Außenzuluftkanal (1Ia) und Innenzuluftkanal (1IIa) revisioniert werden können.

Alternativ kann der Lüfter im Außenluftzuluftkanal (1IIa), Außenluftabluftkanal (1IIb) umgedreht eingebaut werden, damit die Zu- und Abluft sich von links nach rechts und vice versa tauscht. Dann wird der heutige Innenluftzuluftkanal (1Ia) zu (1Ib), der heutige Innenluftabluftkanal (1Ib) zu (1Ia), der heutige Außenluftzuluftkanals (1IIa) zu (1IIb) und der heutige Außenluftabluftkanals (1IIb) zu (1IIa).

Die Vorrichtung ist dadurch gekennzeichnet, dass diese für den Betrieb für alle Lüftungszeiten, das heißt sowohl Winter- als auch Sommerbetrieb, Frühjahr, Herbst, Tag und Nacht geeignet ist und das Kondensat sowohl bei Lüftung mit Erwärmung der Zuluft im Winter im Außenluftabluftkanal (1IIb) als auch bei Lüftung mit Kühlung der Zuluft im Sommer im Außenluftzuluftkanal (1IIa) je nach Anwendung sicher nach außen über einer Rille mit innenliegenden Abflussrohr an der unteren Innenseite des Außenluftzuluftkanals (1IIa) beziehungsweise des Außenluftabluftkanals (1IIb) abgeleitet werden kann.

Um Produktionskosten zu senken besteht die Vorrichtung aus symmetrisch gleichen Halbschalen (1) welche geschäumt aus EPS, oder EPP, gefertigt sind. Die jeweiligen Halbschalen sind in dieser Produktionsvariante gegenseitig über eine umlaufende Dichtungslippe und Dehnfuge (8a und 8b) gegenseitig wasserdicht verschlossen. Zusätzlich werden zur Erhöhung der Stabilität in jeder symmetrisch gleichen Halbschale Stabilitätsstifte und gegenüberliegende Stabilitätshülsen angeordnet. Dadurch können beide Halbschalen wasserdicht verklebt oder wasserdicht verschlossen und wieder nach Einbau an der Fassade an der Gebäudehülle zur Revision geöffnet und wieder verschlossen werden.

In einer anderen Ausführungsform können die jeweiligen Gehäuseschalen auch unterschiedlich Formen haben. Dann bilden unterschiedliche Gehäuseteile die Vorrichtung. Der Innenluftzuluftkanal (1Ia), der Innenluftabluftkanal (1Ib), der Außenluftzuluftkanal (1IIa) und der Außenluftabluftkanal (1IIb) sind so gestaltet, dass für die Installation in ein Wärmedämmverbundsystem die jeweilige Dämmstärke auf das Gehäuse aufgebracht wird. Die Kondensatableitung durch den Außenluftzuluftkanal (1IIa) und der Außenluftabluftkanal (1IIb) ist damit weiterhin gewährleistet. Somit wird das Gehäuse in der gleichen Materialstärke und in der gleichen Materialbeschaffenheit wie die heutigen Materialien der heute verwendeten Wärmedämmverbundsysteme wie EPS, EPX, mineralische Dämmung, Naturdämmstoffe, etc. auf oder in die Gebäudewand eingearbeitet und integriert. Damit sowohl Putz als auch der Kleber für die Aufdoppelung mit weiterem Dämmmaterial gut hält, sind Rillen (9) in die Gehäuseaußenwand integriert.

Der jeweilige Zulufteinlass und Abluftauslass des jeweiligen Luftstromes weist einen Höhenversatz mit Niveauunterschied zwischen (1Ia) und (1IIa) bzw. (1Ib) und (1IIb) entsprechend der Höhe des Plattenwärmetauschers zur Schallreduzierung mit zweifachem Schallbruch in der Vorrichtung, Öffnungen nach Außen liegen immer unterhalb der Öffnungen zur Gebäudeinnenwand, auf.

Die Luftführung ist durch die Lufteinlässe und Luftauslässe je Vorrichtung durch den jeweiligen direkten (1Ia, 1Ib, 1IIa und 1IIb) oder wahlweise seitlichen Lufteingang und Luftausgang (3) für die einfache Luftkanalführung mit einem zusätzlichen eingeführten Luftkanal, der im WDVS oder in der Mauer, etc. verläuft, in einem oder in einer Vielzahl von Räumen gleichzeitig möglich.

## Patentansprüche

1. Vorrichtung mit einem Gehäuse (1) zur Luftführung, zum Kondensatabfluss und zur Halterung eines Plattenwärmetauschers und der dazugehörigen Lüftertechnik, wie Ventilatoren und Elektroleitungen, etc., zur dezentralen Montage auf einer Gebäudeaußenwand, wobei das Gehäuse mit der größten Seitenfläche des Gehäuses zu einer Gebäudewand gerichtet, an einer Gebäudeaußenwand oder in einer Aussparung eines Wärmedämmverbundsystems oder in einer Nische der Außenwand montiert wird, und die im Gehäuse installierten Wärmetauscherplattenebenen vorzugsweise parallel zur Gebäudewand verlaufen, großflächig sind, das heißt die Summe der vier Seitenlängen der Wärmetauscherplatten geteilt durch vier, sind ein Vielfaches des Durchmessers der jeweiligen Lufteinlasskanäle ins Gebäudeinnere, und die schräg verlaufenden Luftkanäle des eingebauten Plattenwärmetauschers (10), vorzugsweise 45° zur senkrechten Achse liegen, wobei die Luftführung durch die jeweiligen direkten Lufteinlässe und Luftauslässe (1Ia, 1Ib, 1IIa und 1IIb) je Modul und/oder wahlweise seitlichen Lufteinlass und Luftauslass (3) möglich ist und der jeweilige Lufteinlass und Luftauslass des jeweiligen Luftstromes einen Höhenversatz mit Niveauunterschied zwischen dem Außenzuluftkanal (1Ia) und Innenzuluftkanal (1IIa) beziehungsweise dem Außenabluftkanal (1Ib) und dem Innenabluftkanal (1IIb) entsprechend der Höhe des Plattenwärmetauschers aufweist, so dass das im Plattenwärmetauscher entstehende Kondensat nach außen über einer Rille mit innenliegenden Abflussrohr an der unteren Innenseite, sicher über den tieferliegenden Außenluftzuluftkanal (1IIa) beziehungsweise den Außenluftabluftkanal (1IIb) abfließen kann, **dadurch gekennzeichnet, dass** das Gehäuse (1) aus symmetrisch gleichen Gehäuseschalen gebildet ist, die aus geschäumten EPS oder EPP gefertigt sind.

2. Vorrichtung nach Anspruch 1, **dadurch gekennzeichnet, dass** jeweils ein Lüfter für den Luftausgangskanal und ein Lüfter für den Lufteingangskanal separat eingebaut werden kann.

3. Vorrichtung nach einem der vorherigen Ansprüche, **dadurch gekennzeichnet, dass** eine Sicherungsplombe (2) und Kabelreservats (6) für die jeweiligen Lüfterkabel integriert ist.

4. Vorrichtung nach einem der vorherigen Ansprüche, **dadurch gekennzeichnet, dass** auf beiden Seiten der Vorrichtung die Einführung eines alternativen Luftauslasses und/oder eines alternativen Lufteinlasses nach innen und/oder von innen durch das Entnehmen des Gehäuseteils (3) und das Einschieben eines Luftflachkanales möglich ist.

5. Vorrichtung nach einem der vorherigen Ansprüche, **dadurch gekennzeichnet, dass** die Anbringung von jeweils einer Sicherungsplombe zur Blockierung der direkten Luftführung in das Gebäudeinnere (1Ia und 1IIb) direkt hinter der Vorrichtung, wie im Falle der Nutzung der alternativen Luftführung wie in Anspruch 4 beschrieben, für den Luftein- und Luftauslass möglich ist.

6. Vorrichtung nach einem der vorherigen Ansprüche, **dadurch gekennzeichnet, dass** die Lüfter sich im Außenbereich der Fassade befinden und zum Innenluftzuluftkanal (1Ia) und Innenluftabluftkanal (1Ib) einen doppeltem Schallbruch aufweisen.

7. Vorrichtung nach einem der vorherigen Ansprüche, **dadurch gekennzeichnet, dass** die Vorrichtung eine umlaufende wasserdichte Dichtungslippe und Dehnfuge aufweist.

8. Vorrichtung nach einem der vorherigen Ansprüche, **dadurch gekennzeichnet, dass** die die abstehenden Luftkanäle (1Ia, 1Ib, 1IIa, 1IIb) beliebig lang sein können und vor Montage auf die genaue Verwendung abgeschnitten werden können.

9. Vorrichtung nach einem der vorherigen Ansprüche, **dadurch gekennzeichnet, dass** die Halbschale an der Außenseite Rillen (9) aufweist.

## Claims

1. An apparatus having a housing (1) for air routing, for condensate discharge and for mounting a plate heat exchanger and the associated ventilation equipment, such as fans and electric leads or the like, for the decentral mounting on an outer building wall, wherein the housing is oriented with the largest side face of the housing towards a building wall, is mounted on an outer building wall or in a recess of a thermal insulation composite system or in a niche of the outer wall, and the level faces of the heat exchanging plates installed in the housing preferably are parallel to the building wall, have a large surface, i.e., the sum of the length of the four sides of the heat exchanging plates divided by four is a multiple of the diameter of the respective air inlet channels into the interior of the building, and the inclined air channels of the installed plate heat exchanger (10) have an angle of preferably 45° with respect to the perpendicular axis, wherein the routing of the air is possible through the respective direct air inlets and air outlets (11a, 11b, 111a and 111b) for each module, and/or optionally through the air inlet and air outlet (3) on the side, and the respective air inlet and air outlet of the respective air flow has a height offset with a level difference between the outer supply air channel (11a) and the inner supply air channel (111a), and the outer exhaust air channel (11b) and the inner exhaust air channel (111b), respectively, that corresponds to the height of the plate heat exchanger, so that the condensate generated in the plate heat exchanger can safely drain outwards via a groove having an interior drain pipe on the lower inner side, through the lower outer air supply air channel (111a) or the outer air exhaust air channel (111b), respectively, **characterised in that** the housing (1) is formed by symmetrically identical housing shells made of foamed EPS or EPP.

2. The apparatus according to claim 1, **characterised in that** a fan for the air outlet channel and a fan for the air inlet channel can each be installed separately.

3. The apparatus according to any one of the preceding claims, **characterised in that** a safety seal (2) and a cable reserve (6) for the respective fan cables is integrated.

4. The apparatus according to any one of the preceding claims, **characterised in that** it is possible, on both sides of the apparatus, to insert an alternative air outlet and/or an alternative air inlet into or from the interior, by removing the housing part (3) and inserting a flat air channel.

5. The apparatus according to any one of the preceding claims, **characterised in that** it is possible to attach one safety seal each for the air inlet and the air outlet, for the blocking of the direct air routing into the interior of the building (11a and 111b) directly behind the apparatus, as in the case of using the alternative air routing described in claim 4.

6. The apparatus according to any one of the preceding claims, **characterised in that** the fans are located in the outer area of the facade and have a double sound refraction towards the inner air supply air channel (11a) and the inner air exhaust air channel (11b).

7. The apparatus according to any one of the preceding claims, **characterised in that** the apparatus has a circumferential water-tight sealing lip and expansion joint.

8. The apparatus according to any one of the preceding claims, **characterised in that** the protruding air channels (11a, 11b, 111a, 111b) can have any length and may be cut to length for the particular use before mounting.

9. The apparatus according to any one of the preceding claims, **characterised in that** the half-shell has grooves (9) on its exterior.

## Revendications

1. Dispositif avec un boîtier (1) pour le guidage d'air, le drainage du condensé et le support d'un échangeur de chaleur à plaques et l'équipement de ventilation associé avec ceci, comme des ventilateurs et des lignes électriques, et cetera, pour le montage décentralisé sur une paroi extérieure de bâtiment, dans lequel le boîtier est orienté vers une paroi de bâtiment avec sa face laterale la plus grande, est monté sur une paroi extérieure de bâtiment ou dans un évidement d'un système composite pour isolation thermique ou dans une niche de la paroi extérieure, et les niveaux des plaques d'échangeur de chaleur installées dans le boîtier sont de préférence parallèles à la paroi de bâtiment, sont de grande taille, c.-à-d., la somme des longueurs des quatre côtés des plaques d'échangeur de chaleur divisée par quatre est un multiple du diamètre des conduits respectifs d'admission d'air dans l'intérieur du bâtiment, et les conduits d'air inclinés de l'échangeur de chaleur à plaques (10) installé sont orientés avec de préférence 45° par rapport à l'axe perpendiculaire, dans lequel le guidage d'air peut s'effectuer par les entrées d'air et sorties d'air directes (11a, 11b, 111a et 111b) respectives pour chaque module, et/ou sélectivement par une entrée d'air et sortie d'air (3) latérale, et l'entrée d'air et sortie d'air respective du courant d'air respectif est décalée en hauteur avec une différence de niveau, respectivement entre le conduit d'admission d'air extérieur (11a) et le conduit d'admission d'air intérieur (111a) et/ou le conduit d'évacuation d'air extérieur (11b) et le conduit d'évacuation d'air intérieur (111b), la différence correspondant à la hauteur de l'échangeur de chaleur à plaques, de telle manière que le condensé généré dans l'échangeur de chaleur à plaques peut s'écouler, de manière sûre, vers l'extérieur à travers d'une rainure avec un tube de drainage intérieur, sur la face interne inférieure, et respectivement à travers du conduit d'air d'admission de l'air extérieur (111a) situé en position inférieure, ou le conduit d'air d'évacuation de l'air extérieur (111b), **caractérisé en ce que** le boîtier (1) est formé de coquilles de boîtier symétriquement identiques qui sont fabriquées de PS ou PP expansé.

2. Dispositif selon la revendication 1, **caractérisé en ce qu'**un ventilateur respectif peut être installé séparément pour le conduit de sortie d'air et le conduit d'entrée d'air.

3. Dispositif selon l'une quelconque des revendications précédentes, **caractérisé en ce qu'**un plomb de sécurité (2) et une réserve de câble (6) pour le câblage du ventilateur respectif sont intégrés.

4. Dispositif selon l'une quelconque des revendications précédentes, **caractérisé en ce qu'**il est possible d'introduire, sur tous les deux côtés du dispositif, une sortie d'air alternative et/ou une entrée d'air alternative, vers ou à partir de l'intérieur, en tirant la partie (3) du boîtier et insérant un conduit plat d'air.

5. Dispositif selon l'une quelconque des revendications précédentes, **caractérisé en ce qu'**il est possible de fixer un plomb de sécurité, respectivement pour l'entrée d'air et la sortie d'air, directement après le dispositif, dans le cas d'utilisation d'un guidage de l'air alternatif, comme décrit dans la revendication 4, pour bloquer le guidage direct d'air vers l'intérieur du bâtiment (11a et 111b).

6. Dispositif selon l'une quelconque des revendications précédentes, **caractérisé en ce que** les ventilateurs se trouvent à l'extérieur de la façade et présentent une double réfraction acoustique par rapport au conduit d'air d'admission d'air intérieur (11a) et au conduit d'air d'évacuation d'air intérieur (11b).

7. Dispositif selon l'une quelconque des revendications précédentes, **caractérisé en ce que** le dispositif présente une lèvre d'étanchéité étanche à l'eau et un joint de dilatation sur toute sa périphérie.

8. Dispositif selon l'une quelconque des revendications précédentes, **caractérisé en ce que** les conduits d'air (11a, 11b, 111a, 111b) saillants peuvent être d'une longueur quelconque et peuvent être coupé à la longueur pour l'utilisation exacte avant leur montage.

9. Dispositif selon l'une quelconque des revendications précédentes, **caractérisé en ce que** la demi-coquille présente des rainures (9) à son côté extérieur.
